# EUROPEAN PATENT APPLICATION

(11) **EP 4 817 955 A1**
(43) Date of publication of application: **07.10.2026**
(21) Application number: 26170266.6
(22) Date of filing: 01.04.2026
(51) Int. Cl.: B60Q 1/50, B60Q 1/00, B60Q 1/26

(54) **STATUS INDICATOR DEVICE AND VEHICLE**

(30) Priority: 03.04.2025 DE 102025113158
(71) Applicant: HELLA GmbH & Co. KGaA, 59552 Lippstadt (DE)
(72) Inventor: DRAGOMIR, Marius Nicolae, 300709 Timisoara (RO); PARDUT, Ovidiu Cristian, 307160 Sat Dumbravita (RO); RUDI, Johann, 34454 Bad Arolsen (DE); STAN, Liviu Nicolae, 307340 Oras Recas (RO); TOTH SURU, Norbi, 300072 Timisoara (RO)
(74) Representative: Behr-Wenning, Gregor

(57) **Abstract**

The present invention relates to a status indicator device (10) for a vehicle (100), the status indicator device (10) comprising a main body (20), at least two light indicators (30), at least one connection interface (40) to connect the status indicator device (10) electrically to the vehicle (100) and at least one attachment means (50) to attach the status indicator device (10) to the vehicle (100), wherein the at least two light indicators (30) are each oriented in a plane and stacked on each other, wherein the connection interface (40) is configured to control the at least two light indicators (30) individually, wherein the at least two light indicators (30) and/or the connection interface (40) are configured for color changing light emission to indicate at least two statuses of the vehicle (100). The invention further relates to a vehicle (100) with at least one status indicator device (10).

## Description

The present invention relates to a status indicator device for a vehicle, in particular for a motor vehicle. The invention also relates to a vehicle, in particular a motor vehicle, with at least one status indicator device.

Vehicles currently known to the public, such as construction or agricultural vehicles, comprise lights for illuminating the surroundings of the vehicle, conventional direction indicators for indicating a change of direction and warning lights for creating awareness of the vehicle.

As vehicle automation technology advances, there is a growing need for improved visual communication from automated vehicles to indicate their status. Currently, most vehicles only comprise warning lights and do not differentiate between different statuses of the vehicle and therefore cannot indicate different statuses of the vehicle.

It is therefore the task of the present invention to eliminate or at least partially eliminate the disadvantages described above in the prior art. In particular, it is the task of the invention to provide a status indicator device for a vehicle with which the indication of at least two statuses of the vehicle is made possible particularly easily. In particular, it is also the task of the invention to provide a vehicle with at least one status indicator device.

The above-mentioned problem is solved by the patent claims. In particular, the problem is solved by a status indicator device for a vehicle with the features of the independent claim 1. Furthermore, the problem is solved by a vehicle with the features of the independent claim 10. Further advantages and details of the invention are apparent from the subclaims, the description and the drawings. Features which are described in connection with the status indicator device according to the invention naturally also apply in connection with the vehicle according to the invention and vice versa in each case, so that reference is or can always be made to the individual aspects of the invention reciprocally with regard to the disclosure.

According to a first aspect of the invention, the problem is solved by a status indicator device for a vehicle. The status indicator device comprises a main body, at least two light indicators, at least one connection interface to connect the status indicator device electrically to the vehicle and at least one attachment means to attach the status indicator device, especially mechanically, to the vehicle, wherein the at least two light indicators are each oriented in a plane and stacked on each other. The connection interface is configured to control the at least two light indicators individually, wherein the at least two light indicators and/or the connection interface are configured for color changing light emission to indicate at least two statuses of the vehicle.

The status indicator device is preferably designed to indicate at least two different statuses for autonomous driving of the vehicle to other traffic participants and/or to pedestrians. For example, the status indicator device emits a first set of light color by means of the at least two light indicators to indicate a manual driving mode and a second set of light color by means of the at least two light indicators to indicate an automatic driving mode of the vehicle. The vehicle is preferably a motor vehicle.

The main body is preferably to be understood and/or designed as a casing for the status indicator device. The at least two light indicators are preferably located inside the main body and/or emit light out of the main body. The status indicator device comprises at least one connection interface to connect the status indicator device, especially the at least two light indicators, to the vehicle. The at least one connection interface is designed to electrically and/or electronically connect the status indicator device, especially the at least two light indicators, to the vehicle. The at least one connection interface preferably comprises at least two, preferably three cables. The status indicator device comprises a common connection interface for a group or all of the at least two light indicators and/or more than one connection interface, especially a connection interface for each light indicator, as described in a later paragraph.

The at least two light indicators are each oriented in a plane, which is preferably to be understood as each light indicator being arranged in its own plane. The planes of each light indicator are preferably stacked on each other. With other words, the light indicators are preferably arranged next to each other, especially in parallel planes. Thereby, each light indicator can advantageously be noticed from different angles around the status indicator device. For example, the at least two light indicators are designed as two levels above each other, signaling the status of a vehicle to other traffic participants or pedestrians.

The connection interface is configured to control the at least two light indicators individually. The connection interface and/or the vehicle comprises a control unit and/or a logical unit to control the connection interface and/or the at least two light indicators individually. Thereby, each of the at least two light indicators are separately controllable and/or can emit light individually and separately from the other light indicator or light indicators. By controlling each light indicator individually, a large number of different sets and/or combinations is made possible in order to indicate at least two statuses of the vehicle and/or to raise awareness.

The at least two light indicators are able to emit a variety of colors each and the at least two light indicators and/or the connection interface are configured for color changing light emission to indicate at least two statuses of the vehicle.

A status indicator device designed in this way is particularly advantageous because the indication of at least two statuses of the vehicle is made possible particularly easily.

According to a preferred further development of the invention, a status indicator device can be provided, such that the at least two light indicators and/or the connection interface are configured for continuous light emission and/or for flashing light emission by means of the at least two light indicators to indicate at least two statuses of the vehicle.

As an addition to the color changing light emission, the continuous light emission and/or flashing light emission by means of the at least two light indicators increase the variety of possible status indications by means of the status indicator device advantageously. The at least two light indicators are able to flash in consistent intervals and/or in changing intervals. The at least two light indicators are preferably configured to continuously emit and/or flashingly emit light individually and/or differently in comparison to each other. For example, at least one of the light indicators emits a constant light while at least one other light indicator emits a flashing light in order to raise a constant and high awareness of the vehicle. A status indicator device designed in this way is particularly advantageous because the indication of at least two statuses of the vehicle is made possible particularly easily, wherein the continuous light emission and/or the flashing light emission by means of the at least two light indicators increase the possibilities for indicating statuses of the vehicle.

According to a preferred further development of the invention, a status indicator device can be provided, such that the at least two light indicators comprise a number of light sources, especially RBG-LEDs, each, especially, wherein each number of light sources is oriented in one of the planes of the at least two light indicators. The at least two light indicators are especially advantageous if each of the at least two light indicators comprises a number of light sources, for example RGB LEDs. The number of light sources of each light indicator is preferably arranged in the aforementioned plane of the corresponding light indicator. For example, each light indicator comprises at least five light sources, preferably at least ten light sources, especially preferably at least 15 light sources. A number of light sources is especially advantageous because it can preferably be arranged to emit in a larger area and/or angle compared to a single light source. For example, the number of light sources for each light indicator is arranged in a circle segment emitting outwardly. The number of light sources preferably increases safety and/or lifetime of the status indicator device by providing at least partially redundant functions. A failure of a light source from a number of light sources is less crucial compared to a single light source per light indicator. A status indicator device designed in this way is particularly advantageous because the indication of at least two statuses of the vehicle is made possible particularly easily, wherein the number of light sources increases brightness, intensity, the emission angle and/or flexibility.

According to a preferred further development of the invention, a status indicator device can be provided, such that the at least two light indicators have a beam angle of at least 170° each, especially at least 180° or at least 190°, especially in the plane of each of the at least two light indicators. The at least two light indicators are especially advantageous if they provide a beam angle of at least 270° each. The at least two light indicators preferably do not provide a 360° beam angle. The beam angle of a light indicator is preferably understood as the angle of an emitting area of the light indicator. The beam angle is preferably understood in line with the plane of the respective light indicator. Preferably the at least two light indicators have identical beam angles and/or identically oriented beam angles. A large beam angle is especially advantageous in order to raise awareness and/or emit the at least two statuses of the vehicle in a preferred angle around the status indicator device and/or the vehicle. The preferred beam angles are preferably achieved by the choice and/or the design of the at least two light indicators and/or the positioning of the status indicator device on the vehicle. For example, the status indicator device is preferably installed at a high and/or the highest point, especially on and/or at a roof and/or a corner of the roof, of the vehicle. A preferred beam angle of the at least two light indicators is preferably achieved by the aforementioned number of light sources and a respective placement and/or orientation of the light sources within the status indicator device, for example in a circle segment. A status indicator device designed in this way is particularly advantageous because the indication of at least two statuses of the vehicle is made possible particularly easily, wherein the beam angles of the at least two light indicators increase an area of effect, visibility and/or awareness.

According to a preferred further development of the invention, a status indicator device can be provided, such that the main body comprises at least two sub-bodies, wherein each of the at least two light indicators is enclosed by one of the at least two sub-bodies, especially wherein the at least two sub-bodies are modularly connectable to each other. The at least two light indicators are preferably constructed as an at least partially modular system, wherein light indicators can be easily added. The sub-bodies are preferably understood as casings for the respective light indicator. The sub-bodies are connectable to each other and/or to a common base of the status indicator device. Preferably each sub-body comprises a connection interface to connect the sub-bodies to each other to a main connection interface and/or to the vehicle electrically and/or electronically. A status indicator device designed in this way is particularly advantageous because the indication of at least two statuses of the vehicle is made possible particularly easily, wherein sub-bodies enable an easy adoption of the status indicator device.

According to a preferred further development of the invention, a status indicator device can be provided, such that the connection interface comprises a LIN connection means and/or a bus connection means to connect the status indicator device electrically to the vehicle and/or to control the at least two light indicators. The LIN connection is preferably understood as a local interconnect network of the status indicator device and/or the vehicle. A connection interface configured as and/or with a LIN connection means and/or a bus connection means is advantageously flexible for installation, maintenance and/or changing the status indicator device and/or the indication of the at least two statuses of the vehicle. The LIN connection means and/or the bus connection means preferably comprise a logic unit of the status indicator device and/or the vehicle in order to control the LIN connection means and/or the bus connection means. A status indicator device designed in this way is particularly advantageous because the indication of at least two statuses of the vehicle is made possible particularly easily, wherein the construction of the connection interface increases flexibility and/or possibilities to utilize and/or change the status indicator device in an especially easy way.

According to a preferred further development of the invention, a status indicator device can be provided, such that the connection interface is configured to control the at least two light indicators based on presets of the status indicator device, especially of a storage medium of the status indicator device, and/or the vehicle. The presets are preferably saved on and/or available from the storage device of the status indicator device and/or the vehicle. The storage device is preferably connected wirelessly or by wire with the connection interface and/or a logic unit of the status indicator device and/or the vehicle. For example, the presets are chosen by a manufacturer and/or a user of the status indicator device and/or the vehicle. For example, different presets are chosen for road environment compared to a construction site environment. Thereby, by selecting different presets, the status indicator device can easily be adapted to changing environments and/or situations. The status indicator device and/or the vehicle preferably comprise a selection device for changing the currently active presets, for example a button, a wheel and/or a display. A status indicator device designed in this way is particularly advantageous because the indication of at least two statuses of the vehicle is made possible particularly easily, wherein the construction of the connection interface increases flexibility and/or possibilities to utilize and/or change the status indicator device in an especially easy way.

According to a preferred further development of the invention, a status indicator device can be provided, such that the at least two light indicators each have an interconnection means to electrically and/or mechanically connect the at least two light indicators to each other. The at least two light indicators are connectable to each other and/or to a common base of the status indicator device by means of the interconnection means. Preferably, each light indicator comprises a connection interface to connect the sub-bodies to each other to a main connection interface and/or to the vehicle electrically and/or electronically. The interconnection means preferably provides an internal connection and/or cable routing for the status indicator device. A status indicator device designed in this way is particularly advantageous because the indication of at least two statuses of the vehicle is made possible particularly easily, wherein sub-bodies enable an easy adoption of the status indicator device.

According to a preferred further development of the invention, a status indicator device can be provided, such that the at least two light indicators each have a connection interface to connect the at least two light indicators electrically to the vehicle. The incorporation of a connection interface for each light indicator enables a simple and preferably identical manufacturing of the light indicators. Each light indicator is connected individually to the vehicle and/or to a connection terminal of the status indicator device. Thereby, the connection can advantageously be repaired, checked and/or changed in the case of any damage or failure. Furthermore, additional light indicators can easily be added or removed, when the environment and/or the situation of the status indicator device and/or the vehicle changes, due to the construction of the connection interfaces.

According to a second aspect of the invention, the problem is solved by a vehicle, especially a motor vehicle, with at least one status indicator device according to the first aspect. The described vehicle has all the advantages that have already been described for the status indicator device according to the first aspect of the invention. The vehicle is preferably a motor vehicle, especially a construction site motor vehicle. The status indicator device is preferably installed at a high and/or the highest point, especially on and/or at a roof and/or a corner of the roof, of the vehicle. Preferably, the vehicle comprises more than one status indicator device, especially four status indicator devices. For example, four status indicator devices are installed at the four corners of a roof of the vehicle for an advantageous visibility of the status indicator devices and/or the indicated statuses. For example, the at least one status indicator device emits a first set of light color by means of the at least two light indicators to indicate a manual driving mode and a second set of light color by means of the at least two light indicators to indicate an automatic driving mode of the vehicle.

A status indicator device and a vehicle according to the invention are explained in more detail below with reference to drawings. The drawings schematically show:
- Fig. 1: a status indicator device with two light indicators,
- Fig. 2: a status indicator device with three light indicators,
- Fig. 3: a vehicle with a status indicator device.

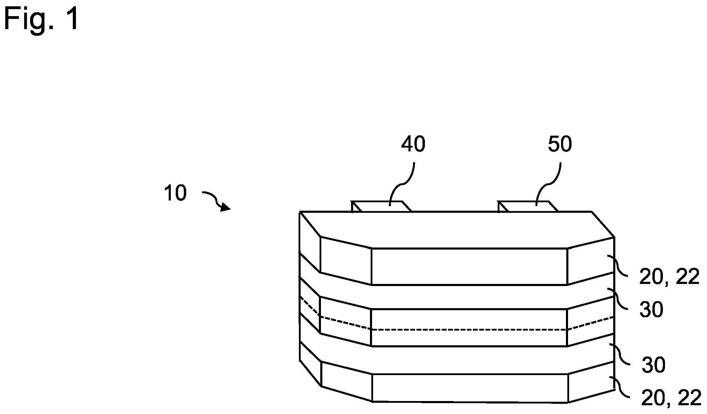

Elements with the same function and mode of operation are each marked with the same reference symbols in Figs. 1 to 3.

In Fig. 1, a status indicator device 10 with two light indicators 30 is schematically shown. The status indicator device 10 comprises a main body 20, at two light indicators 30, at two connection interfaces 40 to connect the status indicator device 10 electrically to the vehicle 100 (not shown), and one attachment means 50, to attach the status indicator device 10 to the vehicle 100 (not shown). The two light indicators 30 are each oriented in a plane and stacked on each other. The connection interfaces 40 are configured to control the two light indicators 30 individually. The two light indicators 30 and the connection interfaces 40 are configured for color changing light emission to indicate two statuses of the vehicle 100 (not shown). The two light indicators 30 and the connection interface 40 are configured for continuous light emission and for flashing light emission by the two light indicators 30 to indicate two statuses of the vehicle 100. The two light indicators 30 comprise a number of light sources, here RBG-LEDs, each, wherein each number of light sources is oriented in one of the planes of the two light indicators 30. The two light indicators 30 have a beam angle of 190° in the plane of each of the two light indicators 30. The main body 20 comprises two sub-bodies 22, wherein each of the two light indicators 30 is enclosed by one of the two sub-bodies 22. The two sub-bodies 22 are modularly connected to each other. The connection interfaces 40 comprise a LIN connection means to connect the status indicator device 10 electrically to the vehicle 100 (not shown) and to control the two light indicators 30. The two light indicators 30 each have a connection interface 40 to connect the two light indicators 30 electrically to the vehicle 100 (not shown).

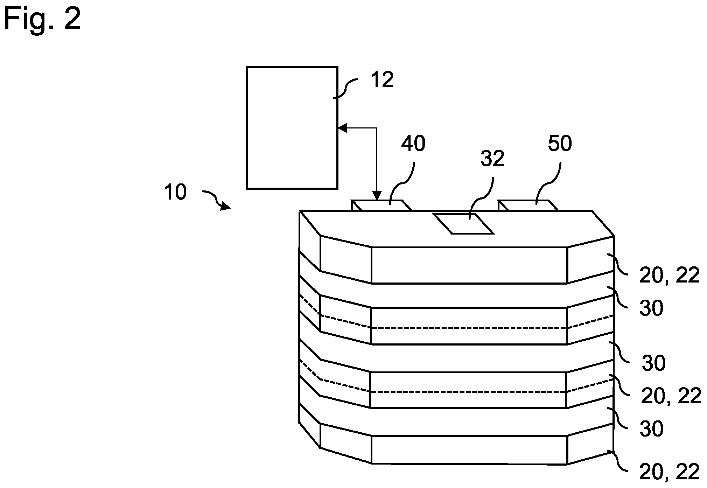

In Fig. 2, a status indicator device 10 with three light indicators 30 is schematically shown. The status indicator device 10 comprises a main body 20, at three light indicators 30, at two connection interfaces 40 to connect the status indicator device 10 electrically to the vehicle 100 (not shown), and one attachment means 50 to attach the status indicator device 10 to the vehicle 100 (not shown). The three light indicators 30 are each oriented in a plane and stacked on each other. The connection interfaces 40 are configured to control the three light indicators 30 individually. The three light indicators 30 and the connection interfaces 40 are configured for color changing light emission to indicate a number of statuses of the vehicle 100 (not shown). The connection interface 40 is configured to control the at least three light indicators 30 based on presets of the status indicator device 10 of a storage medium 12 of the status indicator device 10. The three light indicators 30 each have an interconnection means 32 to electrically and mechanically connect the three light indicators 30 to each other.

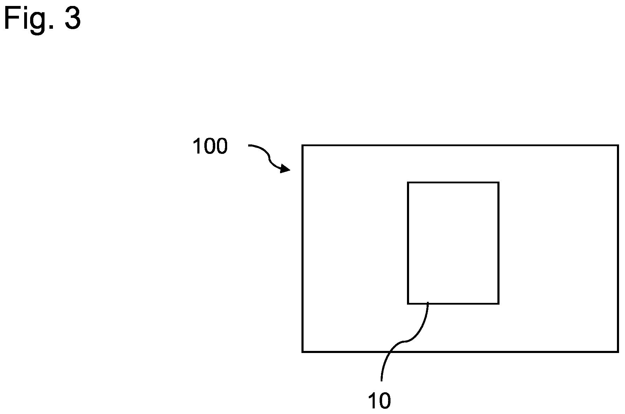

In Fig. 3, a vehicle 100 with a status indicator device 10 is schematically shown.

### List of reference signs

- 10: Status indicator device
- 12: Storage medium

- 20: Main body
- 22: Sub-bodies

- 30: Light indicator
- 32: Interconnection means

- 40: Connection interface

- 50: Attachment means

- 100: Vehicle

## Claims

1. Status indicator device (10) for a vehicle (100), the status indicator device (10) comprising a main body (20), at least two light indicators (30), at least one connection interface (40) to connect the status indicator device (10) electrically to the vehicle (100) and at least one attachment means (50) to attach the status indicator device (10) to the vehicle (100), wherein the at least two light indicators (30) are each oriented in a plane and stacked on each other, wherein the connection interface (40) is configured to control the at least two light indicators (30) individually, wherein the at least two light indicators (30) and/or the connection interface (40) are configured for color changing light emission to indicate at least two statuses of the vehicle (100).

2. Status indicator device (10) according to claim 1,
**characterized in**
**that** the at least two light indicators (30) and/or the connection interface (40) are configured for continuous light emission and/or for flashing light emission by the at least two light indicators (30) to indicate at least two statuses of the vehicle (100).

3. Status indicator device (10) according to any of the previous claims,
**characterized in**
**that** the at least two light indicators (30) comprise a number of light sources, especially RBG-LEDs, each, especially, wherein each number of light sources is oriented in one of the planes of the at least two light indicators (30).

4. Status indicator device (10) according to any of the previous claims,
**characterized in**
**that** the at least two light indicators (30) have a beam angle of at least 170° each, especially at least 180° or at least 190°, especially in the plane of each of the at least two light indicators (30).

5. Status indicator device (10) according to any of the previous claims,
**characterized in**
**that** the main body (20) comprises at least two sub-bodies (22), wherein each of the at least two light indicators (30) is enclosed by one of the at least two sub-bodies (22), especially wherein the at least two sub-bodies (22) are modularly connectable to each other.

6. Status indicator device (10) according to any of the previous claims,
**characterized in**
**that** the connection interface (40) comprises a LIN connection means and/or a bus connection means to connect the status indicator device (10) electrically to the vehicle (100) and/or to control the at least two light indicators (30).

7. Status indicator device (10) according to any of the previous claims,
**characterized in**
**that** the connection interface (40) is configured to control the at least two light indicators (30) based on presets of the status indicator device (10), especially of a storage medium (12) of the status indicator device (10), and/or the vehicle (100).

8. Status indicator device (10) according to any of the previous claims,
**characterized in**
**that** the at least two light indicators (30) each have an interconnection means (32) to electrically and/or mechanically connect the at least two light indicators (30) to each other.

9. Status indicator device (10) according to any of the previous claims,
**characterized in**
**that** the at least two light indicators (30) each have a connection interface (40) to connect the at least two light indicators (30) electrically to the vehicle (100).

10. Vehicle (100) comprising at least one status indicator device (10) according to any of the previous claims.
